**Europäisches Patentamt**

**European Patent Office**

**Office européen des brevets**

(11) Numéro de publication : **0 493 270 A2**

# (12) DEMANDE DE BREVET EUROPEEN

(21) Numéro de dépôt : **91420423.5**

(22) Date de dépôt : **28.11.91**

(51) Int. Cl.$^5$ : **C09D 5/00**

(30) Priorité : **28.11.90 FR 9015247**

(43) Date de publication de la demande :
**01.07.92 Bulletin 92/27**

(84) Etats contractants désignés :
**BE CH DE ES GB IT LI NL**

(71) Demandeur : **Lengrand, Pascal**
**15 Place de l'Orangerie, La Chapelle aux Paons**
**F-69230 Saint Genis Laval (FR)**

(72) Inventeur : **Lengrand, Pascal**
**15 Place de l'Orangerie, La Chapelle aux Paons**
**F-69230 Saint Genis Laval (FR)**

(74) Mandataire : **Gaucherand, Michel**
**Ixas Conseil 15 Rue Emile Zola**
**F-69002 Lyon (FR)**

(54) **Compositions hydrophobes de revêtement de surface à l'état liquide ou pâteux utilisables comme revêtement épais ou semi-épaisdans le bâtiment et la décoration.**

(57) Compositions de revêtement de surfaces, hydrophobe à l'état liquide ou pâteux qui deviennent naturellement hydrophiles par séchage, caractérisées en ce qu'elles comportent selon des combinaisons nouvelles.

a) au moins un composé filmogène qui est un polymère et/ou un copolymère comportant au moins un monomère du type (met) acrylique, et/ou vinylique et/ou styrénique.

b) au moins un agent de réversibilité en milieu aqueux qui permet le passage d'un état hydrophobe à un état hydrophile pour les dites compositions.

c) et une phase liquide destinée à solubiliser le composé filmogène formée par au moins un solvant hydrocarboné choisi dans le groupe constitué par les white-spirit et/ou les solvants parafiniques ou isoparafiniques.

Ces compositions trouvent leur application dans le domaine des revêtements épais ou semi-épais pour la décoration ou dans le traitement de certaines surfaces sensibles à l'eau.

EP 0 493 270 A2

## DOMAINE DE L'INVENTION

La présente invention concerne des compositions hydrophobes de revêtement de surfaces a l'état liquide ou pâteux et hydrophile à l'état sec utilisable notamment comme revêtement épais ou semi-épais dans le bâtiment et la décoration ou le traitement de certaines surfaces sensibles à l'eau.

## EXPOSE DU PHENOMENE ET ARRIERE PLAN DE L'INVENTION

L'emploi du papier peint à des fins décoratives reste aujourd'hui un moyen de décoration très utilisé pour les murs et certains plafonds des locaux d'habitation.
Cependant l'emploi d'un tel matériau, limite par la suite les possibilités éventuelles de changement de décor du fait de deux contraintes principales.

Selon un premier type de contrainte les papiers appliqués restent sensibles à l'humidité (humidité résiduelle de certains supports sur lesquels ils sont collés - zone de condensation - etc...). L'emploi de toute peinture ou produit de décoration ayant comme principe solvant l'eau, dans le but de recouvrir et de décorer ce papier peint est donc à exclure. L'emploi d'un tel type de produit est à l'origine de phénomène de décollement ou accentue celui-ci, ce qui bien entendu n'est pas le but recherché.
D'autre part, avec de tels produits la migration de certains pigments contenus dans les encres ayant servi à l'impression, des motifs du papier peint est parfois importante, et provoque des phénomènes de "zonage" dans le film sec du produit de décoration ultérieurement appliqué.

Selon un deuxième type de contrainte l'emploi d'un produit de décoration exempt d'eau ou de solvant polaire, ne solubilisant pas la colle du papier peint est possible. Cependant une fois appliqué ce produit isole le support et le rend donc indécollable par les moyens usuels.

D'autre part, les solvants pétroliers ou hydrocarbonés contenus dans ces produits, solubilisent plus ou moins partiellement les pigments des encres du papier peint et sont susceptibles de modifier dans certaines zones la teinte du produit appliqué.

C'est pourquoi en règle générale, on applique à nouveau avec plus ou moins de succès un nouveau papier peint sur le précédent. Après un certain nombre de couches, il devient impératif de décoller l'ensemble constitué par les différentes épaisseurs. Cette opération bien connue des professionnels de la rénovation ou des bricoleurs avertis est particulièrement fastidieuse et nécessite souvent après décollage du papier peint une remise en état du support initial (rebouchage - ragréage -etc...).

Il faut noter que le papier neutre - blanc est utilisé pour la décoration et la remise en état des supports difficiles afin d'éviter certains travaux de préparation. Ce papier peint est ensuite décoré en fonction du goût et des aspirations de l'utilisateur. Il a l'avantage, hormis celui de son décollement éventuel pour l'application d'un produit en phase aqueuse, ou de sa décollabilité devenue très difficile par application d'une peinture ou enduit isolant de ne pas initier de phénomène de migration ou de coloration du produit ultérieurement appliqué du fait de la neutralité de son support.
A ce titre, il est intéressant de noter que le ou les fabricants de ce type de papier peint ne proposent pas de solutions adéquates pour les deux problèmes cités précédemment (décollage ou indécollabilité).

Au titre des concepts de réversibilité de certains filmogènes par l'eau, on peut citer ceux exploités en particulier pour la protection de pièces mécaniques et éléments de construction métalliques dans le cadre de la formulation de vernis temporaires reversibles.

Ces solutions consistent à fixer sur un support un vernis protecteur dont l'élément filmogène est un mélange de polymère ou copolymère possédant des fonctions acides et dilués dans un solvant ou un mélange de solvants organiques.

Après séchage et évaporation des solvants, le vernis ainsi déposé sera mis en contact par trempage ou pulvérisation avec une solution de déprotection basique ou aminée. (La réaction acide - base qui donne un sel, et dans le cas cité sel soluble dans l'eau) permettra par lavage l'élimination du vernis antérieurement appliqué. Ces solutions sont en règle générale efficaces, lorsqu'il y a trempage de la pièce ou de la surface considérée en permettant une homogénéité de la réaction par un temps de contact suffisant. Pour la déprotection par pulvérisation, le résultat est beaucoup moins homogène et nécessite une phase de déprotection souvent répétée.
Il faut ici rappeler que le milieu concerné est dans le cas précité d'un pH élevé pour la solution de déprotection, ce qui est à proscrire.

Une formule plus évoluée et qui permet une réversibilité plus rapide, consiste à introduire dans le film protecteur, au moment de son dépôt ou a générer au moment de sa déprotection un élément qui va permettre une solubilisation plus grande et donc une autoélimination plus efficace du vernis appliqué. Ces éléments sont en général des corps gras ou des dérivés de corps gras. La réaction citée dans le précédent exemple à savoir :

Acide - Base qui donne sel, est complétée par la réaction de saponification suivante :
Ester d'acide gras ou acide gras + base donnant un savon.

La combinaison de ces deux réactions suite à l'action de la solution de déprotection qui est une base ou une amine permet une solubilisation et donc élimination du film protecteur bien supérieure à celle du cas précédent.

Il faut également noter que la formation d'un savon ou d'une saponide contribue à un mouillage bien supérieur du support et donc favorise les rinçages ultérieurs.

Cependant comme dans le cas précédent, ce procédé reste très dépendant d'une solution de neutralisation dont le pH alcalin est très accentué.

Les solutions existantes de réversibilité à l'eau proposées ci-dessus sont limitées à l'utilisation de vernis, pour des supports de "type fermé" (c'est-à-dire des supports qui ne présentent aucun aspect d'absorption ou de transmission par porosité) ne présentant pas de risque de réactivité potentielle avec le film appliqué. Une telle utilisation de vernis est par exemple décrite dans le brevet français n° 2553095.

Mais ces solutions qui présentent des inconvénients majeurs, ne sont pas transposables au domaine des surfaces, sensibles ou très sensibles à l'eau ou aux solvants hydrocarbonés usuels ; (et en particulier aux surfaces recouvertes à des fins décoratives).

En conséquence, un premier objet de l'invention vise au recouvrement de surfaces sensibles à l'eau telles que par exemple les papiers peints appliqués et (ou dégradés) les revêtements muraux, les supports cartonnés. Un autre objet de l'invention vise au traitement d'objets dont les surfaces doivent être protégées momentanément.

## SOMMAIRE DE L'INVENTION

L'invention qui répond aux objectifs précités, consiste en des compositions de revêtement de surfaces hydrophobes à l'état liquide et, ou pâteux et hydrophiles quand elles se présentent sous la forme d'un film sec, c'est-à-dire après élimination de tout ou partie de la phase liquide.

Selon l'invention les compositions de revêtement de surfaces hydrophobes avant leur mise en oeuvre et hydrophiles dès lors qu'elles ont été appliquées sur des surfaces à traiter, et séchées, se caractérisent en ce qu'elles comportent selon des combinaisons nouvelles :

a) Au moins un composé filmogène qui est un polymère et/ou un copolymère comportant au moins un monomère du type (met) acrylique, et/ou vinylique, et/ou styrénique.

b) Au moins un agent de réversibilité en milieux aqueux qui permet le passage d'un état hydrophobe à un état hydrophile pour les dites compositions.

c) Et une phase liquide destinée à solubiliser le composé filmogène, formée par au moins un solvant hydrocarboné choisi dans le groupe constitué par les white-spirit et/ou les solvants parafiniques ou isoparafiniques.

## DESCRIPTION DETAILLEE DE L'INVENTION

Développement de a)

Le composé filmogène des dites compositions selon l'invention est choisi parmi ceux des polymères et/ou copolymères du type acrylique et/ou vinylique et/ou styrenique solubilisables dans la phase liquide hydrocarbonée et autorisant une concentration pigmentaire volumique (C.V.P.) élevée.

Le composé filmogène est préférentiellement choisi parmi les polymères et/ou copolymères à partir des monomères acryliques acides ou estérifiés, ou de leur combinaison avec des monomères du type vinyl-toluène, styrène.

Développement de b)

L'agent de réversibilité des dites compositions selon l'invention afin de permettre un effet de réversibilité à l'eau ou à la vapeur d'eau du film séché est choisi parmi des polymères ou copolymères, de type acrylique ou(met) acrylique - des polymères à chaîne cellulosique de type carboxyméthyl ou hydroxyethylcellulosique - des polymères réalisés à base de l'acrylamide tel que le polyacrylamide.

Introduits sous forme micronisée ou sous forme d'émulsion, ils sont totalement inactifs dans la phase constituée par le solvant hydrocarboné et le filmogène et ne viennent pas modifier la rhéologie de la composition (état de viscosité). Une fois le film séché, c'est-à-dire après le départ des solvants, ils retrouvent leurs caractéristiques d'hydrophilie. Répartis uniformément dans la masse du film sec "ils minent" celui-ci dès qu'il y a contact avec un solvant polaire et en particulier l'eau, en favorisant la diffusion du solvant et en provoquant un ronflement et un décollement du film antérieurement appliqué.

L'agent de réversibilité qui permet aux dites compositions dès qu'elles sont séchées d'avoir un comportement hydrophile sera préférentiellement choisi parmi des polymères réalisés à partir de monomères acrylique ou (met) acrylique ou acrylamide. Ces éléments seront introduits sous la forme d'une émulsion dans un solvant parafinique ou isoparafinique ou de la famille des white-spirit mis en oeuvre seul ou en mélange.

Développement de c)

La phase liquide est constituée par au moins un solvant qui est sélectionné parmi la famille des white-spirit ou des solvants parafiniques ou isoparafiniques. Le ou les solvants sont sélectionnés en fonction de 4 critères principaux :

– Une compatibilité avec le ou les liants utilisés, ce qui implique une bonne stabilité dans le temps, de la phase constituée par le filmogène solibilisé dans le solvant.

– Une vitesse d'évaporation bien réglée afin d'éviter une détrempe des surfaces et supports devant recevoir les dites compositions (une détrempe importante peut initier ou favoriser la migration de certains pigments ou tanins).

– Une inertie et un pouvoir solvant faible vis-à-vis des encres et pigments contenus dans certains supports pour lesquels les dites compositions sont destinées.

– Une inertie vis-à-vis des substances ayant servies au collage ou à l'enduction de certains supports (colles - primers - etc...).

Le ou les solvants constituant la phase liquide seront préférentiellement choisis parmi les white-spirit à faible teneur en aromatique (- 5 %) ou parmi des solvants de type para ou isoparafiniques.

Dévelopement de d)

Divers éléments tels que : charges - fibres - agents opacifiants - pigments spécifiques - additifs de mouillage et de stabilité - de conversation sont introduits dans les dites compositions afin d'obtenir des comportements et des adaptations spécifiques à certaines surfaces et supports.

Les charges et pigments utilisés sont des charges et pigments minéraux de type carbonate ou silice. La coupe granulométrique de ces charges et pigments est réglée en fonction du type de produit souhaité et de leur mode d'application (enduction directe ou technique de projection). L'effet opacifiant est assuré par des pigments du type dioxyde de titane ou lithopone complété par des agents extendeurs (carbonate micronisé - silicate d'aluminium - sulfate de calcium - etc...).

Des pigments de type oxyde de zinc ayant la propriété de bloquer certains pigments et tanins en particulier ceux contenus dans les supports en bois ou dérivés du bois peuvent être introduits dans les dites compositions.

Des fibres de type textile peuvent être introduites dans les compositions formulées. Dans ce cas elles viennent renforcer l'effet de cohésion du film et permettent une adaptation meilleure pour certaines techniques d'application (technique par projection).

D'autres additifs usuels tels que : agents mouillants - agents antimousse -agents plastifiants - agents plastifiants cosolvants - agents anticryptogamiques sont introduits dans les formulations proposées.

COMPOSITION EN QUANTITATIF

Les dites compositions comprennent :

a) de I,5 % à 20 % de l'élément filmogène exprimé en poids et préférentiellement de 3 à 9 % de cet élément solubilisé dans la phase hydrocarbonée (en fonction des performances recherchées pour chacune des compositions).

b) l'agent de réversibilité introduit dans la phase constituée par le filmogène qui est solubilisé dans le ou les solvants hydrocarbonés, a un pourcentage pondéral compris entre 0,3 et I6 pourcent (en matière active) par rapport à la masse totale de la composition. Préférentiellement, on travaillera avec un pourcentage pondéral compris entre 0,6 et 8 pourcent par rapport à l'ensemble de la composition.

c) le ou les mélanges de solvants hydrocarbonés qui permettent la solubilisation de l'élément filmogène ont un pourcentage pondéral compris ent I0 et 70 pourcent de l'ensemble de la composition. On veille à respecter un rapport pondéral minimum de 3 parties de solvant pour I partie de filmogène.

d) les charges et pigments éventuellement introduits dans la composition ont un pourcentage pondéral compris entre 0 et 70 pourcent.

Le pourcentage global moyen se situe entre 30 et 60 pourcent exprimé en poids par rapport à la composition.

Dans le cadre de l'introduction d'oxyde de zinc on préconise un pourcentage pondéral compris entre 0,5 et 3 pourcent. Plus généralement on introduit I,5 pourcent d'oxyde de zinc exprimé en poids par rapport à l'ensemble de la composition.

Les fibres textiles introduites seront comprises entre 0,5 et 5 pourcent en poids en fonction de l'effet de texturation souhaité.

Les autres additifs tels que agents mouillants - agents antimousse -agents plastifiants - agents plastifiants cosolvants - agents anticryptogamiques sont introduits avec les pourcentages préconisés par les fournisseurs.

En règle générale, le pourcentage global des additifs nommés ci-dessus sera compris entre I et 3 pourcent exprimé en poids par rapport à la composition.

A titre d'exemple non limitatif, on va décrire ci-après des exemples de réalisation des compositions selon l'invention.

Exemple I - : Composition de Revêtement épais texturé selon l'invention

| | |
|---|---|
| . Résine type vinyl toluène acrylate ...................... | 3,5 |
| . White-spirit (- 5 % aromatique)........................ | I7 |
| . Agent mouillant type lécithine de soja ................. | 0,35 |
| . Polyacrylamide à 30 % en émulsion dans un solvant parafinique .................................................. | 2,5 |
| . Dioxyde de titane type rutile ........................ | 5 |
| . Carbonate de calcium (coupe I0 - 60 micron) ............. | 38 |
| . Carbonate de calcium ( 60 - I50 micron)................. | 23 |
| . Fibre polyethylène (I5 décitex) ........................ | 0,6 |
| . Carbonate de calcium (350 - 700 micron) ................. | 6 |
| . Carbonate de calcium (I - 2 mm) ........................ | 6 |
| | 10I,95 |

Un essai d'application a été effectué avec cette composition dans une pièce d'habitation présentant un papier peint (2 épaisseurs) dégradé (2 zones décollées - couleur générale non uniforme avec des couleurs"passées" suite à un vieillissement non uniforme du papier peint) la surface à rénover de 22 m2 a été traité par enduction directe, puis structuré avec un rouleau alvéolé. 38 Kgs de produits ont été nécessaires pour la rénovation. Le produit selon la composition nouvelle a été directement appliqué sur le support sans préparations spécifiques de celui-ci (seules les parties déjà décollées ont été éliminées par arrachage).

Après un séchage de 4 heures, on a obtenu un décor parfaitement homogène et une teinte blanche uniforme, les reliefs et défauts du support recouvert ont été totalement masqués.

Ce chantier a été effectué par un opérateur non spécialisé en 2 heures et 40 minutes.

A titre comparatif une composition de l'art connu commercialisée sous l'appellation "crépi intérieur décollable" a été essayé dans des conditions analogues. Il faut noter ici que les fabricants de ce type de produits préconisent un essai sur une surface restreinte avant application sur un papier peint ainsi que l'application d'un primer ou sous-couche isolante.

6m2 ont été enduits puis structurés avec le produit nommé ci-dessus. Après quelques minutes, les raccords du papier peint se sont partiellement décollés, le support et la partie supérieure d'un lé se sont décollés totalement entraînant le produit appliqué. Compte tenu d'un phénomène de décollement très accentué du support, l'opération n'a pas été poursuivie sur une surface plus importante. Il faut également noter ici que des attaches métalliques noyées dans le support, après séchage du produit appliqué ont provoqué des taches et auréoles d'oxyde de fer très accentuées.

Exemple 2 - : Composition de revêtement semi-épais

Application par projection (aspect mat pommelé) - Couleur Blanc

5

| | |
|---|---|
| . Résine type acrylate ........................................ | 4 |
| . White spirit ............................................. | IO |
| . Isopar ................................................. | IO |
| . Agent mouillant type lécithine de soja ................. | 0,35 |
| . Polyacrylamide à 30 % en émulsion dans l'Isopar.......... | 2,8 |
| . Dioxyde de titane ....................................... | 3 |
| . Lithopone .............................................. | 4 |
| . Carbonate de calcium (IO - 60 micron) ................... | 38 |
| . Carbonate de calcium (60 - I50 micron) .................. | 25 |
| . Carbonate de calcium (I50 - 500 micron)................. | 6 |
| . Fibre cellulose ........................................ | I,5 |
| | ———————— |
| | IO4,65 |
| | ======= |

Un local présentant 3 épaisseurs de papiers peints sur 2 murs, la surface restante étant composée de plaques de plâtre cartonées et d'un coffre en bois aggloméré a été rénové soit une surface de 4I m2, avec la composition nouvelle décrite ci-dessus. La technique par projection a été retenue car elle permet d'obtenir un décor plus régulier et une application facilitée sur la zone du plafond.

73 Kgs de produit selon la composition ont été nécessaires.

Le décor obtenu est parfaitement homogène avec un aspect pommelé très régulier malgré l'hétérogénéité du support. Le local a été réaménagé après I2 heures. Un seul opérateur a réalisé ce travail en 2 heures et 50 minutes.

A titre comparatif un produit de l'art connu commercialisé sous l'appellation "Revêtement fibré pelable" a été appliqué directement par projection sur une zone mixte : papier peint - bois aggloméré de 7 m2.

Compte tenu d'un pourcentage en eau important présent dans ce produit, le papier peint s'est rapidement décollé au niveau des zones de raccord quelques minutes après la projection.

Après séchage sur la partie constituée par du bois aggloméré la teinte initiale du produit était fortement altérée avec un phénomène de "zonage" très accentué.

Exemple 3 - : Composition de peinture épaisse structurée - aspect gouttelette satinée

Application rouleau alvéolé.

Compte-tenu d'une C.P.V. plus faible, le film obtenu est légèrement satiné.

| | | |
|---|---|---|
| . Résine type vinyl toluène acrylate .......................... | IO | |
| . White-spirit désaromatisé (- 5 %) ...................... | 33 | |
| . Lécithine de soja ............................... | 0,40 | |
| . Hydroxyéthyl cellulose micronisée ...................... | 0,60 | |
| . Polyacrylamide ............................... | 5 | |
| . Dioxyde de titane ............................... | 9 | |
| . Lithopone ............................... | 6 | |
| . Carbonate de calcium précipité ......................... | 3 | |
| . Carbonate de calcium (2 - 20 micron ) ................. | 2I | |
| . Carbonate de calcium (20 - 40 micron ) ................. | I2 | |
| . Pâte colorante rouge ............................... | 0,40 | |

IOO,40

Deux murs principaux soit I6 m2 ayant préalablement reçus une seule épaisseur de papier peint en bon état, à l'exceptipn d'une zone fortement encrassée de I,5 m2 ont été recouverts (application rouleau alvéolé) par la peinture décrite ci-dessus.

5 Kgs 800 du produit ont été nécessaires. Le décor obtenu a un aspect "rose pastel" pommelé légèrement satiné. Les raccords de papier peint, compte tenu de la charge appliquée (350 g/m2), ont été totalement dissimulés. Après séchage aucune "reprise" n'a été observée et le décor est parfaitement homogène.

Un essai de décollage sur une surface de 4,50 m2 a été effectué pour la composition n°3 à l'aide d'une machine à décoller (type électrique Black & Decker) 5 minutes 30 secondes ont été nécessaires pour restituer le support à son état d'origine (plaque placoplâtre ayant reçue préalablement un fixateur de fond).

Aucun produit équivalent à ce jour n'a pû être mis en parrallèle à titre d'essai comparatif. Les produits de l'art connus qui permettent d'obtenir un effet décoratif similaire ne sont proposés que pour des supports neufs ou sains. Appliqué sur support tel que le papier peint, ils provoquent le décollement partiel ou complet de celui-ci ou isole complètement le support.

**Revendications**

I) Compositions de revêtement de surfaces, hydrophobe à l'état liquide ou pâteux, qui deviennent naturellement hydrophiles par sèchage, caractérisées en ce qu'elles comportent selon des combinaisons nouvelles.

a) au moins un composé filmogène qui est un polymère et/ou un copolymère comportant au moins un monomère du type (met) acrylique, et/ou vinylique, et/ou styrénique.

b) au moins un agent de réversibilité en milieu aqueux qui permet le passage d'un état hydrophobe à un état hydrophile pour les dites compositions.

c) et une phase liquide destinée à solubiliser le composé filmogène formée par au moins un solvant hydrocarboné choisi dans le groupe constitué par les white-spirit et/ou les solvants parafiniques ou isoparafiniques.

2) Composition selon la revendication (I) caractérisées en ce que le composé filmogène est choisi dans le groupe constitué par les polymères et/ou copolymères acryliques et/ou vinyliques et/ou styréniques ayant la propriété d'être soluble dans la phase liquide hydrocarboné.

3) Compositions selon les revendications (I) ou (2) caractérisées en ce que le composé filmogène est préférentiellement choisi dans le groupe constitué par les polymères et/ou copolymères de monomères acryliques, sous forme acide ou estérifié combinés ou non avec des monomères vinyl-toluène et/ou styrène.

4) Compositions selon l'une quelconque des revendications (I) à (3) caractérisée en ce que l'agent de réversibilité qui permet le passage d'un état hydrophobe à un état hydrophile est choisi dans le groupe constitué par les polymères et/ou les copolymères de type acrylique et/ou ses dérivés en émulsion dans au moins un solvant hydrocarboné, les polymères à chaîne cellulosique de type carboxyméthylcellulisé et hydroxyéthycellulose sous forme micronisée, pulvérulente ou dispersée dans un solvant hydrocarboné, et les polymères à base d'acrylamide et/ou de ses dérivés - en émulsion dans un solvant hydrocarboné - pris seuls ou en mélange.

5) Compositions selon l'une quelconque des revendications (I) à (4) caractérisées en ce que l'agent de réversibilité est préférentiellement choisi dans le groupe constitué par les polymères et/ou copolymères de type acrylique et/ou méthacrylique et/ou acrylamide, pris seuls ou en mélange.

6) Compositions selon l'une quelconque des revendications (4) ou (5) caractérisées en ce que le solvant hydrocarboné est préférentiellement choisi dans le groupe constitué par les solvants parafiniques et/ou isoparafiniques, les solvants de la famille des white-spirit, mis en oeuvre seuls ou en mélange.

7) Compositions selon l'une quelconque des revendications (I) à (6) caractérisées en ce que les dites compositions comportent l'un au moins des divers éléments connus choisis dans le groupe constitué par les charges, les fibres, les agents opacifiants, les pigments spécifiques, les agents mouillants, les agents stabilisants, les agents de conservation, les agents plastifiants et/ou cosolvants et les agents anticryptogamiques.

8) Compositions selon l'une quelconque des revendications (I) à (7) caractérisées en ce qu'elles comprennent exprimées en poids :

a) de I,5 à 20 % et de préférence de 3 à 9 % de composé filmogène par rapport à la masse totale de la composition

b) de 0,3 % à I6 % et préférentiellement de 0,6 % à 8 % de l'agent de réversibilité par rapport à la masse totale de la composition

c) de I0 % à 70 % de la phase liquide par rapport à la masse totale de la composition

d) de I à 70 % de divers éléments connus.

9) Applications à la rénovation et décoration interne de l'habitat selon l'une au moins des revendications (I) à (8).